**Europäisches Patentamt**

**European Patent Office**

**Office européen des brevets**

(19)

(11) Veröffentlichungsnummer: **0 173 854**
**B1**

(12)

# EUROPÄISCHE PATENTSCHRIFT

(45) Veröffentlichungstag der Patentschrift:
**28.10.87**

(21) Anmeldenummer: **85109479.7**

(22) Anmeldetag: **27.07.85**

(51) Int. Cl.⁴: **B 23 K 11/02**

(54) **Einrichtung zum Stumpfschweissen von hohlzylindrischen und längsgeschlitzten Rohlingen zu Felgenrohstücken.**

(30) Priorität: **04.09.84 DE 3432488**

(43) Veröffentlichungstag der Anmeldung:
**12.03.86 Patentblatt 86/11**

(45) Bekanntmachung des Hinweises auf die Patenterteilung:
**28.10.87 Patentblatt 87/44**

(84) Benannte Vertragsstaaten:
**DE FR GB IT NL SE**

(56) Entgegenhaltungen:
**US - A - 2 713 626**

(73) Patentinhaber: **H.A. SCHLATTER AG, Brandstrasse 24, CH-8952 Schlieren Zürich (CH)**

(72) Erfinder: **Zollinger, Hans Rudolf, Bergstrasse 23, CH-8954 Geroldswil (CH)**

(74) Vertreter: **Patentanwälte Schaad, Balass & Partner, Dufourstrasse 101 Postfach, CH-8034 Zürich (CH)**

**Beschreibung**

Die vorliegende Erfindung betrifft eine Einrichtung zum Stumpfschweissen von hohlzylindrischen und längsgeschlitzten Rohlingen zu Felgenrohstücken gemäss dem Oberbegriff des Patentanspruches 1.

Eine solche Einrichtung ist beispielsweise aus der US-PS 2 713 626 bekannt.

Bei der bekannten Einrichtung besitzt jede der beiden Spannvorrichtungen je eine bewegliche Spannbacke, die mit der zugeordneten festen Spannbacke eine Art «Alligator»-Maul bildet in das der Rohling parallel zu seiner Axe einzuschieben ist. Die Zustellbewegung der beweglichen Spannbacke auf die zugeordnete feste Spannbacke ist eine Schwenkbewegung mit dem Ergebnis, dass der spezifische Anpressdruck nicht ohne weiteres über die gesamte Spannfläche stets gleichmässig ist. Dies hat zur Folge, dass der Schweissstrom unterschiedliche Übergangswiderstände zu überwinden hat, was zu unerwünschten lokalen Erhitzungen in der Nähe des herzustellenden Schweissstromes führen kann. Da ausserdem die Rohlinge durch eine Axialverschiebung zwischen die Spannbacken zu bringen und durch eine weitere entgegengesetzte Axialverschiebung wieder aus den Spannbacken zu entfernen sind, ist bei der bekannten Einrichtung das Zu- und Wegführen der Werkstücke entweder nur von Hand möglich, oder aber nur mit erheblichem technischen Aufwand. Wollte man die bekannte Einrichtung auf automatischen Betrieb umrüsten, bräuchte es eine Roboter-artige Einrichtung zum Zu- und Wegführen der Rohlinge.

Der Vollständigkeit halber sei erwähnt, dass eine ähnliche, jedoch gattungsfremde Einrichtung auch aus der GB-PS 1 556 556 bekannt ist. Diese bildet eine Station einer in dieser GB-PS beschriebenen Fertigungsstrasse, die mehrere Stationen aufweist. Der ersten Station werden auf genaue Länge zugeschnittene Bandabschnitte aus Blech zugeführt und hier durch Biegewalzen zu längsgeschlitzten Rohlingen umgebogen. Durch alle Stationen dieser Fertigungsstrasse erstreckt sich ein nur einseitig an der ersten Station verankerter Führungsdorn, längs welchem die Rohlinge schrittweise axial mittels taktweise hin und her angetriebenen Greifern von Station zu Station vorgeschoben werden. Die zweite Station dieser Fertigungsstrasse ist eine Prägestation, die in vorliegendem Zusammenhang nur insofern von Interesse ist, als im genannten Führungsdorn auf der Höhe der Prägestation auch die den Präge- oder Pressstempeln zugeordneten Gegenwerkzeuge verankert sind. Die dritte Station ist die Schweissstation und entspricht (für sich allein gesehen) der erwähnten ähnlichen Einrichtung. Die festen Spannbacken dieser Schweissstation sind hier aber auf dem Führungsdorn befestigt und die beweglichen Spannbacken wirken vom Aussenumfang her auf die an den Längsschlitz angrenzenden Randbereiche der Rohlinge.

Es ist daher eine Aufgabe der Erfindung, eine Einrichtung der eingangs genannten Gattung zu schaffen, bei der die Klemmkraft auf die Randbereiche der Rohlinge praktisch gleichmässig verteilt ist und bei der die Zu- und Wegführung der Rohlinge mittels eines einfachen schrittweise stets in derselben Richtung angetriebenen Förderers möglich ist.

Zur Lösung dieser Aufgabe weist die vorgeschlagene Einrichtung die im Kennzeichen des Patentanspruches definierten Merkmale auf.

Damit ist bei der vorgeschlagenen Einrichtung ein grundsätzlich verschiedenes Konzept verwirklicht. Die Bemessung und damit die Steifheit der festen Spannbacken sind ohnehin nicht durch die Abmessungen der Rohlinge begrenzt. Die beweglichen Spannbacken jeder der beiden Vorrichtungen weisen zwei Teilbacken auf, die zweckmässig spiegelsymmetrisch ausgebildet sind und axial von beiden Seiten her in die Rohlinge hineinschwenkbar und sodann in einer im wesentlichen geradlinigen Bewegung auf die festen Spannbacken zustellbar sind. Zum einen bringt dies den Vorteil, dass in Freigabestellung der Teilbacken die Rohlinge bzw. die geschweissten Felgenrohstücke frei zugänglich und damit quer zu ihrer Axe zu- bzw. wegführbar sind, und zum anderen den Vorteil, dass in Klemmstellung der Teilbacken der spezifische Klemmdruck gleichmässiger und im wesentlichen symmetrisch verteilt ist.

Merkmale bevorzugter Ausführungsformen sind den abhängigen Ansprüchen zu entnehmen.

Nachstehend ist rein beispielsweise eine Ausführungsform der vorgeschlagenen Einrichtung anhand der Zeichnung beschrieben. Es zeigt:

Fig. 1 einen Querschnitt durch eine Einrichtung längs der Linie I-I der Fig. 3, wobei die eine Teilbacke (rechts) in ausgeschwenkter und die andere Teilbacke (links) in eingeschwenkter Lage (jedoch noch nicht in Klemmstellung) dargestellt ist,

Fig. 2 einen Schnitt längs der Linie II-II der Fig. 3, wobei die beiden Teilbacken (davon die linke in Klemmstellung) weggebrochen dargestellt sind,

Fig. 3 einen Längsschnitt in vertikalen, längs der Linie III-III der Fig. 4 versetzten Schnittebenen, und

Fig. 4 eine Draufsicht auf die Einrichtung aus der im wesentlichen der Verlauf der Schnittlinie III-III zu entnehmen ist.

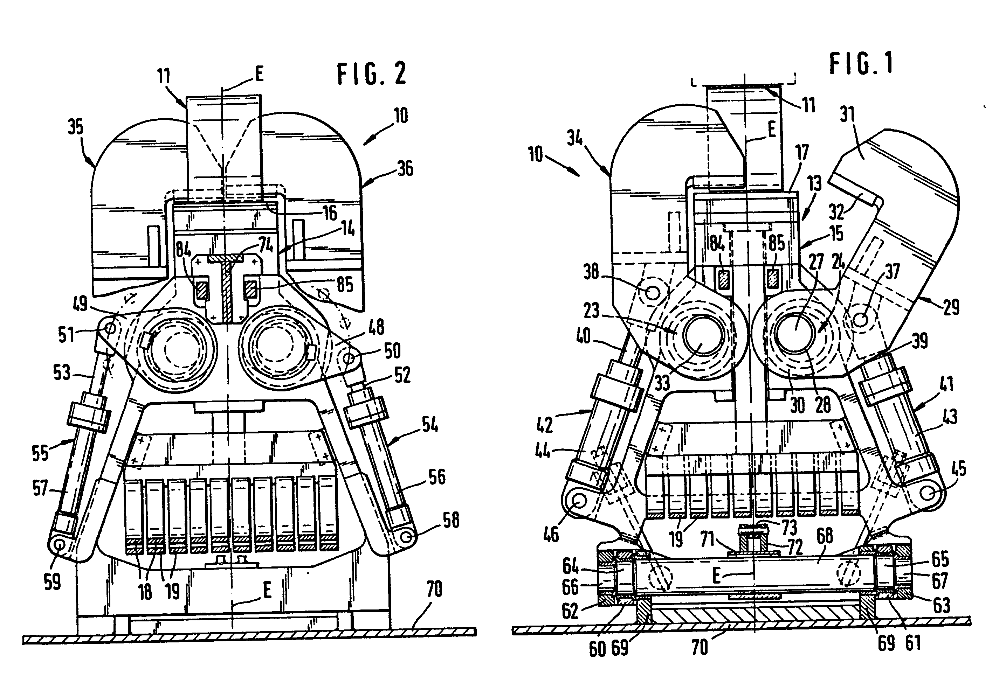

Bei der dargestellten Einrichtung 10 erkennt man in den Fig. 1 und 2 einen in der Einrichtung bereitstehenden Rohling 11, der — wie bei der Fabrikation von Felgenrohstücken üblich — im wesentlichen die Form eines längsgeschlitzten (der Längsschlitz ist nicht sichtbar) Hohlzylinders aufweist, wobei die an den Längsschlitz angrenzenden Randbereiche etwas abgeflacht sind.

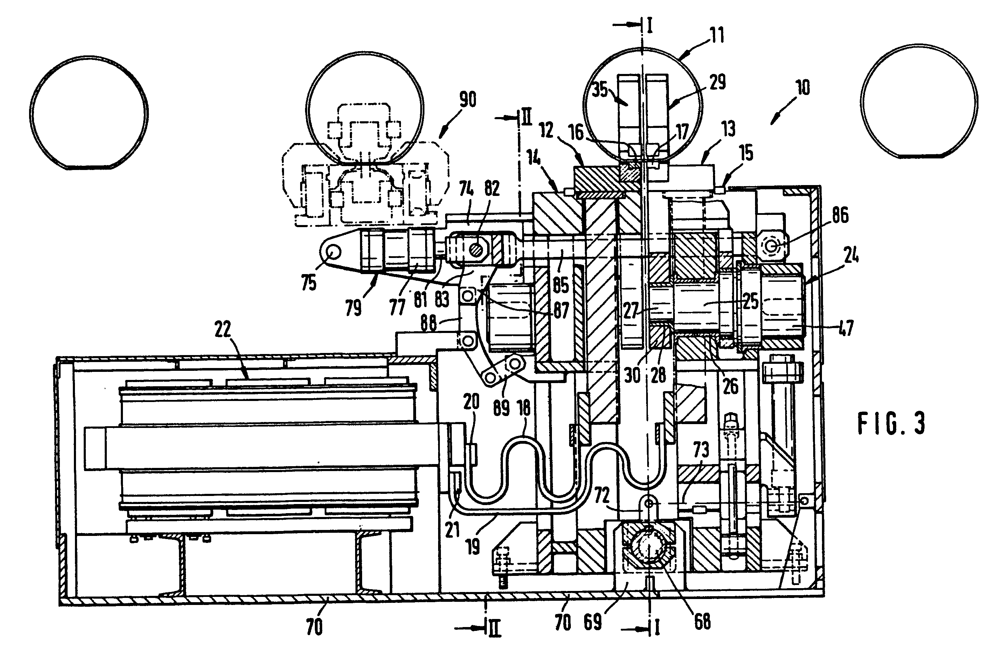

Diese Rohlinge 11 werden durch eine nicht dargestellte, schrittweise arbeitende Fördereinrichtung quer zur Achsrichtung der Rohlinge 11 und einzeln der Einrichtung zugeführt, sowie — wie in Fig. 3 angedeutet — in gleichmässigen Abständen voneinander von der Einrichtung wieder wegbefördert.

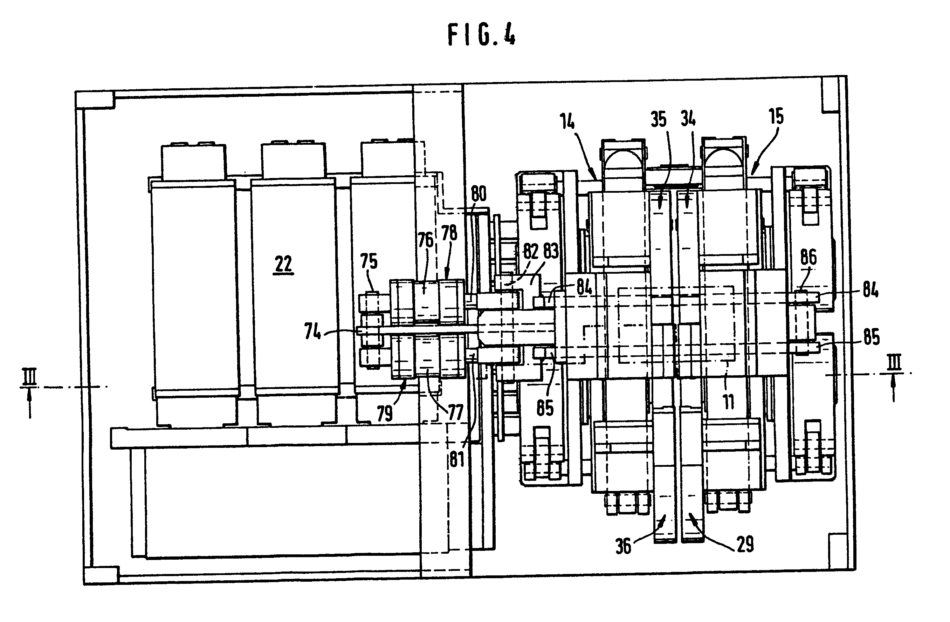

Wie aus den Fig. 3 und 4 hervorgeht, ist die Einrichtung in ihren wesentlichen Bestandteilen (abgesehen von der Stromquelle) sozusagen symmetrisch zu einer durch den Längsschlitz eines Rohlings 11 gehende Diametralebene, d.h. zu einer durch die Linie I-I der Fig. 3 gehende, zur Zeichenebene rechtwinklige Ebene ausgebildet. Ebenso geht aus den Fig. 1 u. 2 hervor, dass die wesentlichen Bestandteile der Einrichtung ausserdem spiegelsymmetrisch zu der in Fig. 1 u. 2 mit E bezeichneten Symmetrieebene ausgebildet sind.

Zunächst weist die Einrichtung 10 zwei Spannvorrichtungen 12, 13 (Fig. 3) auf, von denen jede zum Festklemmen eines der an den Längsschlitz angrenzenden Randbereiche der Rohlinge 11 dient. Wie sich noch zeigen wird, sind die beiden Spannvorrichtungen 12, 13 auch Bestandteile der Mittel, um vor, während und nach dem Schweissvorgang die an den Längsschlitz angrenzenden Ränder der Rohlinge 11 aneinander zu pressen.

Jede der Spannvorrichtungen 12, 13 besitzt ein kräftig bemessenes Gestell 14 bzw. 15, an deren oberem Ende je eine ebene Spannbacke 16 bzw. 17 eingesetzt ist. Diese Spannbacken 16 bzw. 17 sind über das betreffende Gestell 14 bzw. 15 und über je einen Satz biegsamer Leiter 18 bzw. 19 an die Ausgangsklemmen 20 bzw. 21 einer Schweiss-Stromquelle 22 angeschlossen.

Jedes der Gestelle 14, 15 ist von zwei kräftigen Wellen 23, 24 (Fig. 1) durchsetzt. Diese Wellen 23, 24 sind in verschiedene Abschnitte unterschiedlicher Durchmesser unterteilt, wobei der mittlere Abschnitt 25 der Welle 24 (nur in Fig. 3 sichtbar) drehbar in einer Büchse 26 gelagert ist. Analog dasselbe gilt für die Welle 23 im Gestell 15. Ebenso ist das Gestell 14 von zwei Wellen durchsetzt, die — wie bereits erwähnt — wie die Wellen 23, 24 geformt sind, jedoch symmetrisch zu diesen bezüglich der Schnittebene I-I angeordnet sind.

An der der Symmetrieebene I-I näheren Seite des mittleren Abschnittes 25 schliesst einstückig ein zu diesem achsparaleler, jedoch exzentrischer Abschnitt 27 an, auf dem über eine Büchse 28 das eine Ende 30 einer C-förmigen Teilbacke 29 verschwenkbar gelagert ist. Das andere Ende 31 dieser Teilbacke 29 ist mit einem zur festen Spannabacke 17 komplementären Klemmstück 32 versehen. Gepaart ist diese Teilbacke 29 mit einer spiegelsymmetrisch zur Ebene E ausgebildeten, und ebenfalls auf einem dem exzentrischen Abschnitt 27 analogen, exzentrischen Abschnitt 33 der Welle 23 schwenkbar gelagerten Teilbacke 34. Die beiden Teilbacken 29 und 34 bilden somit zusammen die bewegliche Spannbacke, die mit der festen Spannbacke 17 zusammenwirkt.

Ebenso wirkt mit der festen Spannbacke 16 eine bewegliche Spannbacke zusammen, die ihrerseits zwei Teilbacken 35, 36 aufweist (Fig. 2), die genau gleich wie die Teilbacken 34 bzw. 29 ausgebildet und auf einem entsprechenden exzentrischen Abschnitt der beiden das Gestell 14 durchsetzenden Wellen schwenkbar gelagert sind.

Der Fig. 1 ist zu entnehmen, dass die Teilbacken 29 und 34 zunächst axial von beiden Seiten her in die Rohlinge 11 einschwenkbar und von der eingeschwenkten Lage wieder herausschwenkbar sind. Die Teilbacke 29 ist in Fig. 1 in herausgeschwenkter und die Teilbacke 34 in eingeschwenkter jedoch noch nicht in klemmender Stellung gezeigt. Dabei ist jedoch zu bemerken, dass die Schwenkbewegung aller Teilbacken 29, 34 sowie 35, 36 im wesentlichen gleichzeitig erfolgt. Zur Ausführung dieser Schwenkbewegung ist die Teilbacke 29 bzw. 34 über einen Zapfen 37 bzw. 38 an das Ende der Kolbenstange 39 bzw. 40 eines vorzugsweise doppeltwirkenden Hydraulikaggregates 41 bzw. 42 angelenkt, dessen Zylinder 43 bzw. 44 über einen Zapfen 45 bzw. 46 am unteren Teil des Gestelles 15 angelenkt ist. Die Hydraulikaggregate 41, 42 sind über nicht dargestellte Leitungen und über Steuerventile mit einer ebenfalls nicht dargestellten Druckmittelquelle verbunden.

Wie den Fig. 2 und 3 zu entnehmen ist, ist auf dem dem exzentrischen Abschnitt 27 gegenüberliegenden Endabschnitt 47 (Fig. 3) der Welle 24 (und der entsprechenden übrigen drei Wellen) je ein kräftiger Ausleger 48 bzw. 49 (Fig. 2) aufgekeilt. Am freien Ende dieser Ausleger 48, 49 ist über einen Zapfen 50 bzw. 51 die Kolbenstange 52 bzw. 53 eines weiteren, doppeltwirkenden Hydraulikaggregates 54 bzw. 55 angelenkt, dssen Zylinder 56 bzw. 57 über einen Zapfen 58 bzw. 59 am unteren Ende des betreffenden Gestelles — in Fig. 2 am Gestell 14 — angelenkt ist. Auch die Hydraulikaggregate 54, 55 sind über nicht dargestellte Druckleitungen sowie Steuerventile an eine Druckmittelquelle angeschlossen.

Werden die Hydraulikaggregate 54, 55 mit Druck beaufschlagt, so wird die entsprechende Kolbenstange von der in Fig. 2 für die Kolbenstange 52 gezeigten Ruhelage, in der die entsprechende Teilbacke 36 noch nicht in Klemmstellung ist, nach oben in die in Fig. 2 für die Kolbenstange 53 gezeigte Lage getrieben. Damit wird über den entsprechenden Ausleger 48 bzw. 49 die Welle, auf der dieser aufgekeilt ist, verdreht, wodurch der exzentrische Abschnitt 27 bzw. 33 nach unten verschwenkt wird, der seinerseits die Teilbacke, die auf diesem Abschnitt gelagert ist, auf die zugeordnete feste Backe zustellt und dabei den entsprechenden Randbereich des Rohlings festklemmt.

Den Fig. 1 und 3 ist zu entnehmen, dass die beiden Gestelle 14 und 15 an ihrem unteren Ende über Büchsen 60, 61 bzw. 62, 63 verschwenkbar auf Endabschnitten 64, 65 bzw. 66, 67 einer Welle 68 abgestützt sind. Diese Welle 68 ist ihrerseits in Lagerböcken 69 drehbar gelagert, die von einer Grundplatte 70 nach oben abstehen. In der Mitte der Welle 68 ist auf dieser eine Schelle 71 aufgekeilt, die zwei Ausleger 72 aufweist, an den eine nur schematisch angedeutete Zustange 73 angreift. Solange die Zugstange nicht axial verschoben wird, ist die Welle 68 somit daran gehindert, zu drehen.

Die Endabschnitte 66, 67 sind exakt koaxial zum Hauptkörper der Welle 68, während die Abschnitte 64, 65, an denen das Gestell 14 angelenkt ist, bezüglich der Abschnitte 66, 67 leicht exzentrisch ist, wie aus der Fig. 3 ersichtlich ist. Durch axiales Verschieben der Zugstange 73 lässt sich somit die Schwenkachse des Gestelles 14 in bezug auf jene des Gestelles 15 leicht verstellen.

Daraus ergibt sich, dass die Gestelle 14, 15 samt den an diesen vollständig abgestützten Spannvorrichtungen 12, 13 im beschränkten Masse aufeinander zu und voneinander weg verschwenkbar sind. Zu diesem Zweck sind zu beiden Seiten eines sich vom Gestell 14 weg erstreckenden Auslegers 74 (Fig. 2, 3) über einen Zapfen 75 die Zylinder 76, 77 (Fig. 4) zweier doppeltwirkender Hydraulikaggregate 78, 79 angelenkt, deren Kolbenstangen 80, 81 über einen gemeinsamen Zapfen 82 an einem kräftigen Bügel 83 angelenkt sind. Vom Bügel 83 gehen zwei Zugstangen 84, 85 aus, die, wie den Fig. 1 und 2 zu entnehmen ist, mit Spiel entsprechende Öffnungen (ohne Bezugsziffer) in den Gestellen 14 und 15 durchsetzen. Das freie Ende dieser Zugstangen 84, 85 ist, wie den Fig. 3 und 4 zu entnehmen ist, über einen gemeinsamen Zapfen 86 an der der Ebene I-I abgekehrten Seite am Gestell 15 angelenkt.

Der an den Kolbenstangen 80, 81 angelenkte Bügel besitzt auch einen nach unten sich erstreckenden Ausleger 87, an dem das eine Ende einer Wippe 88 angelenkt ist. Das andere Ende der Wippe 88 ist über eine Lasche 89 an der der Schnittebene I-I abgekehrten Seite des Gestells 14 angelenkt.

Daraus ergibt sich, dass wenn die Hydraulikaggregate 78, 79 in dem Sinne beaufschlagt werden, dass die Kolbenstangen 80, 81 eingezogen werden, die beiden Gestelle 14, 15 mit Ihren Spannvorrichtungen gegeneinander verschwenkt werden und zwar — wegen der Wippe 88 — um den gleichen Weg. Da dieser Weg, gemessen auf der Höhe der festen Spannbacken 16, 17 nur einige wenige Millimeter beträgt, nämlich bis die Ränder am Längsschlitz der Rohlinge 11 einander gepresst werden, kann diese Bewegung, obwohl streng genommen kreisbogenförmig, nämlich um die Welle 68, als praktisch geradlinig angesehen werden.

Bei der beschriebenen Einrichtung ist es möglich, mit den beiden Spannvorrichtungen 12, 13 Klemmkräfte in der Grössenordnung von 50 t auszuüben und mit denselben Spannvorrichtungen auch Stauchkräfte von bis gegen 35 t auszuüben, wobei elastische Durchbiegungen der festen Spannbacken 16, 17 sowie der beiden diesen zugeordneten Teilbacken 29, 34 bzw. 35, 36 trotz diesen Kräften praktisch vernachlässigbar sind.

Nach erfolgter Schweissung werden die Felgenrohstücke durch die bereits erwähnte, jedoch nicht dargestellte Fördervorrichtung einer in Fig. 3 nur schematisch und gestrichelt angedeuteten Egalisier- und Entgratstation 90 zugeführt, an der spanabhebend die Schweissnaht innen und aussen sowie umfangsseitig egalisiert wird.

Danach gelangen die so fertig festellten Felgenrohstücke wie üblich an mehrere Walzstationen, in denen sodann das Profil der fertigen Felgen eingewalzt wird.

**Patentansprüche**

1. Einrichtung zum Stumpfschweissen von hohlzylindrischen und längsgeschlitzten Rohlingen (11) zu Felgenrohstücken, mit Mitteln (12, 13; 78, 79; 84, 85; 88) zum Aneinanderpressen der einander zugekehrten Ränder des Längsschlitzes der Rohlinge (11) und mit jedem der an den Längsschlitz angrenzenden Bereiche der Rohlinge zugeordneten Spannvorrichtungen (12, 13) um diese Bereiche festzuspannen und diesen Schweissstrom zuzuführen, wobei jede Spannvorrichtung eine feste, an eine Schweissstromquelle (22) angeschlossene und jeweils einen Rohling an dessen Aussenumfang abzustützen bestimmte Spannbacke (16, 17) sowie eine bewegliche am Innenumfang jeweils eines Rohlings anzugreifen bestimmte Spannbacke (29, 34; 35, 36) aufweist, die auf die zugeordnete feste Spannbacke (16, 17) zustellbar und von dieser entfernbar ist, dadurch gekennzeichnet, dass jede bewegliche Spannbacke zwei zangenartig und axial von beiden Seiten her in den Innenumfang des Rohlings (11) einschwenkbare Teilbacken (29, 34; 35, 36) aufweist, deren Schwenkbewegung unabhängig von deren im wesentlichen geradlinigen Zustellbewegung auf die zugeordnete, feste Spannbacke (17, 16) ist.

2. Einrichtung nach Patentanspruch 1, dadurch gekennzeichnet, dass die Teilbacken (29, 34; 35, 36) in bezug aufeinander spiegelsymmetrisch ausgebildet sind, je auf einem Abschnitt (27, 33) einer Welle (24) drehbar gelagert sind, welcher Abschnitt (27, 33) exzentrisch bezüglich der Axe der Welle (24) ist, wobei auf jeder Welle ein abstehender Arm (48, 49) aufgekeilt ist, an dessen Ende ein die Zustellbewegung der Teilbacken (29, 34; 35, 36) auf die feste Backe (17, 16) bewirkendes Hubelement (54, 55) angreift.

3. Einrichtung nach Patentanspruch 2, dadurch gekennzeichnet, dass jede Teilbacke (29, 34; 35, 36) an ein Hubelement (41, 42) gekoppelt ist, mit dem die Teilbacke um den genannten Abschnitt (27, 33) der Welle verschwenkbar ist.

4. Einrichtung nach Patentanspruch 1, dadurch gekennzeichnet, dass jeder der Spannvorrichtungen (12, 13) mit den Spannbacken und den beiden Teilbacken auf einem Gestell (14, 15) montiert ist, wobei beide Gestelle an einer gemeinsamen, die Schwenkachsen der Teilbacke (29, 34; 35, 36) rechtwinklig kreuzenden Schwenkwelle (68) aneinander angelenkt sind und gegensinnig aufeinander zu und voneinander weg verschwenkbar sind.

5. Einrichtung nach den Patentansprüchen 2 und 4, dadurch gekennzeichnet, dass die Welle (68), an der die Gestelle (14, 15) der Spannvorrichtungen (12, 13) aneinander angelenkt sind, auf derselben Seite der festen Spannbacken (16, 17) angeordnet ist, wie die Abschnitte (27, 33) auf denen die Teilbacken (29, 34; 35, 36) schwenkbar gelagert sind.

6. Einrichtung nach Patentanspruch 5, dadurch gekennzeichnet, dass ein einerends an dem einen Gestell angelenktes Kolben-Zylinderaggregat (78, 79) angeordnet ist, dessen verschiebbarer Teil (80, 81) über eine Zug- und Schubstange (84, 85) an das andere Gestell (15) und über eine ortsfest gelagerte Wippe (88) an das eine Gestell (14) gekoppelt ist.

**Claims**

1. Device for butt-welding hollow cylindrical, longitudinal slit blanks (11) to form wheel rim hoops, with means (12, 13; 78, 79; 84, 85; 88) for pressing together the mutually confronting edges of the longitudinal slit of the blanks (11) and with clamping devices (12, 13), each associated to the regions adjoining the longitudinal slit of the blanks, for clamping these regions and for supplying to same a welding current, each clamping device comprising a stationary clamping jaw (16, 17) connected to a source (22) of welding current and adapted to support a blank at its outer periphery and comprising a moveable clamping jaw (29, 34; 35, 36) adapted to engage the inner periphery of a blank, said moveable being moveable towards and away from the associated stationary clamping jaw (16, 17), characterized in that each moveable clamping jaw comprises two partial jaw members (29, 34; 35, 36) pivotable axially from both sides into the inner periphery of the blank (11), the pivoting movement of the partial jaw members being independent of their substantially straight movement towards the associated stationary clamping jaw (16, 17).

2. Device according to claim 1, wherein the partial jaw members (29, 34; 35, 36) are mutually axially symmetrical and are each rotatably journalled on a section (27, 33) of a shaft (24), said section (27, 33) being excentric with respect to the axis of the shaft (24), each of the shafts having keyed thereto a protruding arm (48, 49), the end of which being engaged by a thrust element (54, 55) causing the substantially straight motion of the partial jaw members (29, 34; 35, 36) towards the stationary clamping jaw (17, 16).

3. Device according to claim 2, wherein each partial jaw members (29, 34; 35, 36) is coupled to a thrust element (41, 42) for causing a pivotal movement of the partial jaw member about said section (27, 33) of the shaft.

4. Device according to claim 1, wherein each of the clamping devices (12, 13) with the stationary clamping jaws and the two partial jaw members is mounted in a frame (14, 15), the two frames being hingedly joined together about a common pivot shaft (68) crossing the pivot axis of the partial jaw members (29, 34; 35, 36) at a right angle, the two frames being counter-rotatively pivotable toward and away from one another.

5. Device according to claims 2 and 5, wherein the pivot shaft (68), at which the frames (14, 15) of the clamping devices (12, 13) are hingedly connected, is positioned on the same side of the stationary clamping jaws (16, 17) as the sections (27, 33) on which the partial jaw members (29, 34; 35, 36) are pivotably journalled.

6. Device according to claim 5, wherein there is provided a piston-cylinder assembly (78, 79) one end of which being hingedly connected to one of the frames, and the movable part (80, 81) of which being coupled via a push-pull rod (84, 85) to the other frame (15) and via a stationarily journalled rocking lever (88) to the one frame (14).

**Revendications**

1. Appareil qui, destiné à souder en bout des ébauches (11) en forme de cylindres creux et fendues longitudinalement de façon à obtenir des jantes brutes, comporte des moyens (12, 13; 78, 79; 84, 85; 88) pour presser l'un contre l'autre les bords, situés l'un en regard de l'autre, de la fente longitudinale des ébauches (11), et des dispositifs de serrage (12, 13) qui, associés respectivement à chacune des régions des ébauches voisines de la fente longitudinale, servent à serrer ces régions de manière fixe et à leur amener du courant de soudage, chaque dispositif de serrage comportant une mâchoire fixe (16, 17) reliée à une source de courant de soudage (22) et destinée à suppoerter chaque fois une ébauche au niveau de la périphérie externe de celle-ci, ainsi qu'une mâchoire mobile (29, 34; 35, 36) qui, destinée à agir sur la périphérie interne de chaque ébauche individuelle, peut être rapprochée et éloignée de la mâchoire fixe associée (17, 16), caractérisé en ce que chaque mâchoire mobile comporte deux mors (29, 34; 35, 36) qui peuvent être amenés, en basculant, à la manière dune pince et axialement des deux côtés à l'intérieur de la périphérie interne de l'ébauche (11) et dont le mouvement de basculement est indépendant de leur mouvement d'avance, sensiblement rectiligne en direction de la mâchoire fixe associée (17, 16).

2. Appareil selon la revendication 1, caractérisé en ce que les mors (29, 34; 35, 36) sont réalisés symétriquement entre eux et montés sur un tronçon (27, 33) d'un arbre (24) de manière à pouvoir tourner, lequel tronçon (27, 33) est excentré par rapport à l'axe de l'arbre (24), tandis que sur chaque arbre est clavetée une console (48, 49) sur l'extrémité de laquelle agit un organe de levage (54, 55) qui opère le mouvement d'avance des mors (29, 34; 35, 36) en direction de la mâchoire fixe (17, 16).

3. Appareil selon la revendication 2, caractérisé en ce que chaque mors (29, 34; 35, 36) est relié à un organe de levage (41, 42) au moyen duquel le mors peut être basculé autour du tronçon cité (27, 33) de l'arbre.

4. Appareil selon la revendication 1, caractérisé en ce que chacun des dispositifs de serrage (12, 13) avec les mâchoires fixes et les deux mors est monté sur une structure de support (14, 15), les deux structures de support étant articulées sur un arbre de basculement commun (68) qui croise perpendiculairement les axes de basculement des mors (29, 34; 35, 36), et pouvant basculer, en sens contraire l'un de l'autre, de façon à se rapprocher ou s'écarter.

5. Appareil selon la revendication 2 ou 4, caractérisé en ce que l'arbre (68) sur lequel les structures de support (14, 15) des dispositifs de serrage (12, 13) sont articulées l'une par rapport à l'autre est monté du même côté des mâchoires fixes (16, 17) que les tronçons (27, 33) sur lesquels les mors (29, 34; 35, 36) sont montés de manière à pouvoir basculer.

6. Appareil selon la revendication 5, caractérisé en ce qu'il est prévu un vérin (78, 79) articulé au niveau de l'une de ses extrémités sur l'une des structures de support et dont l'élément susceptible de coulisser (80, 81) est relié par l'intermédiaire d'une barre de traction et de poussée (84, 85) à l'autre structure de support (15) et par l'intermédiaire d'un culbuteur (88) monté fixe à la première citée (14) des structures de support.

FIG.1

FIG.2

FIG. 3

0 173 854

FIG.4